# EUROPEAN PATENT APPLICATION

(11) **EP 2 546 629 A2**
(43) Date of publication of application: **16.01.2013**
(21) Application number: 12175731.4
(22) Date of filing: 10.07.2012
(51) Int. Cl.: G01N 1/40

(54) **Apparatus and methods for acquiring analytes from a dried biological fluid sample**

(30) Priority: 11.07.2011 US 201113180313
(71) Applicant: Agilent Technologies, Inc., Santa Clara, CA 95051 (US)
(72) Inventor: Yong, Ben, Loveland, CO Colorado 80537-0599 (US); Hudson, William C, Loveland, CO Colorado 80537-0599 (US)
(74) Representative: Grünecker, Kinkeldey, Stockmair & Schwanhäusser

(57) **Abstract**

An apparatus for acquiring analytes from a dried biological fluid sample includes a tube, a substrate in a proximal section of the tube, and a sorbent bed in a distal section of the tube. A biological fluid sample is dispensed on the substrate and is dried to form a dried sample. A conditioning solvent is flowed into the distal section to condition the sorbent bed. A first elution solvent is flowed through the substrate and the sorbent bed. Analytes are eluted from the dried sample and retained on the sorbent bed. A second elution solvent is flowed through the substrate and the sorbent bed. The analytes are eluted from the sorbent bed, pass through an opening, and are collected. Alternatively, an elution solvent is flowed through the substrate and the sorbent bed such that analytes eluted from the dried sample pass through the sorbent bed and the opening for collection, while non-analytes are retained on the sorbent bed.

## Description

### TECHNICAL FIELD

The present invention relates generally to dried biological fluid sample analysis and the formation and processing of dried biological fluid samples in preparation for subsequent analysis.

### BACKGROUND

Dried biological fluid sample analysis such as dried blood spot (DBS) analysis is becoming increasingly popular for pharmaceutical companies in clinical trials. Collection sites for clinical trials may sample blood spots (or other types of biological fluid spots) in the field, allow the spots to dry, and then ship the spots at a lower cost than liquid samples due to the non-biohazard status of dried blood spots and the less rigorous requirements for temperature control. Blood spotting is also becoming useful in preclinical work as analytical chemists are required to store samples for Incurred Sample Reanalysis (ISR) studies, and dried blood spots have proven to be an effective way to stabilize the analytes and the matrix. Typically, DBS samples are prepared by applying drops of blood, typically obtained from venipuncture of a human or animal, to an absorbent substrate (e.g., filter paper) of an appropriate composition. The blood saturates the substrate and is air dried for a period of time (e.g., several hours) sufficient to form an array of circular dried blood spots on the substrate. The spot-containing substrate may then be stored in a plastic container and transported as needed without needing to be frozen. The dried blood spots may thereafter be separated from the bulk substrate by punching the dried blood spots to create individual dried blood spot disks. Analytes such as pharmaceutical compounds, genetic materials, etc. (i.e., small molecules or high molecular weight molecules) may then be extracted from dried blood spots by any number of techniques and subjected to analytical testing. Other types of biological fluid samples may be dried and subsequently processed in an analogous manner.

The processing of dried blood spots and other types of biological fluid spots has many problems. For instance, labs typically utilize a single punching device for multiple sample spotting procedures. Even with the use of cleaning and sterilization procedures, the repeated use of the same punching device can cause carryover and cross-contamination. In addition, the conventional punch device is typically constructed of steel so as to be hard or strong enough to punch through conventional spotting substrates. The steel punching device often must be employed with a hammer to achieve effective punching. Moreover, steel is generally not considered to be readily disposable as compared to other types of materials such as various plastics. More generally, the requirement by conventional procedures of the use of a punching device is, in and of itself, laborious ad time-consuming. Additionally, procedures such as extraction and collection of analytes and pass-through clean-up have conventionally required the use of other instruments separate from and in addition to the punch device. In a typical example, protein precipitation or solid phase extraction is utilized to transfer the sample to a suitable matrix, remove interferences and concentrate or dilute the sample as necessary. Also, conventional processing of dried biological fluid spots has not been compatible with automated (or robotic) assaying and liquid handling systems.

In view of the foregoing, there is a need for providing improved apparatus and methods for processing dried biological fluid samples. There is also a need for providing apparatus and methods for processing dried biological fluid samples in which the apparatus or method does not require the use of a punch device for creating the dried biological fluid samples, and/or does not require the dilution of the dried biological fluid samples with an aqueous buffer. There is also a need for providing apparatus and methods for processing dried biological fluid samples in which various types of solid phase extraction (SPE) procedures, including sample clean-up, may be implemented utilizing a single apparatus. Additionally, there is a need for providing apparatus and methods for processing dried biological fluid samples in which the apparatus is readily disposable and thus readily replaceable after a single use.

### SUMMARY

To address the foregoing problems, in whole or in part, and/or other problems that may have been observed by persons skilled in the art, the present disclosure provides methods, processes, systems, apparatus, instruments, and/or devices, as described by way of example in implementations set forth below.

According to one implementation, a method is provided for acquiring analytes from a dried biological fluid sample. A biological fluid sample is dispensed on a substrate disposed in a fixed position in a proximal section of a tube. The biological fluid sample is dried on the substrate to form a dried biological fluid sample. A conditioning solvent is flowed into a distal section of the tube adjoining the proximal section to condition a sorbent bed disposed in a fixed position in the distal section. An elution solvent is flowed through the substrate and the sorbent bed, wherein analytes are eluted from the dried biological fluid sample. The analytes passing through an opening of the distal section are collected.

According to another implementation, the eluted analytes are passed through the sorbent bed and to the opening, while retaining non-analytes on the sorbent bed.

According to another implementation, the elution solvent by which the analytes are eluted from the dried biological fluid sample is a first elution solvent, and the eluted analytes are retained on the sorbent bed. A second elution solvent is flowed through the substrate and the sorbent bed, wherein the analytes are eluted from the sorbent bed and pass through the opening. In some implementations, before flowing the second elution solvent, a wash solvent is flowed through the substrate and the sorbent bed to remove residual non-analytes from the tube.

According to another implementation, a method is provided for acquiring analytes from a dried biological fluid sample. A biological fluid sample is dispensed on a substrate that is disposed in a fixed position in a proximal section of a tube. The biological fluid sample is dried on the substrate to form a dried biological fluid sample. A conditioning solvent is flowed into a distal section of the tube adjoining the proximal section to condition a sorbent bed disposed in a fixed position in the distal section. A first elution solvent is flowed through the substrate and the sorbent bed. Analytes are eluted from the dried biological fluid sample and retained on the sorbent bed. A second elution solvent is flowed through the substrate and the sorbent bed. The analytes are eluted from the sorbent bed and pass through the distal tube opening. The analytes passing through the distal tube opening are collected.

In some implementations, the first elution solvent is flowed through a proximal tube opening of the proximal section, through the proximal section, through the distal section, and through a distal tube opening of the distal section. In some implementations, the second elution solvent is flowed through the proximal tube opening, the proximal section, the distal section and the distal tube opening.

In some implementations, before flowing the second elution solvent, a wash solvent is flowed through the substrate and the sorbent bed to remove residual non-analytes from the tube.

According to another implementation, a method is provided for acquiring analytes from a dried biological fluid sample. A biological fluid sample is dispensed on a substrate disposed in a fixed position in a proximal section of a tube. The biological fluid sample is dried on the substrate to form a dried biological fluid sample. A conditioning solvent is flowed into a distal section of the tube adjoining the proximal section to condition a sorbent bed disposed in a fixed position in the distal section. An elution solvent is flowed through the substrate and the sorbent bed. Analytes are eluted from the dried biological fluid sample and pass through the sorbent bed and an opening of the distal section, while non-analytes are retained on the sorbent bed. The analytes passing through the opening are collected.

In some implementations, the elution solvent is flowed through a proximal tube opening of the proximal section, through the proximal section, through the distal section, and through a distal tube opening of the distal section.

According to any of the methods, the substrate may be installed in the proximal section. In some implementations, the substrate is installed by inserting the substrate through an opening of the proximal section and fixing the position of the substrate in the proximal section. In various implementations, the position of the substrate may be fixed by bringing the substrate into frictional contact with an inner surface of the proximal section, bringing the substrate into contact with an inner shoulder of the proximal section, placing the substrate between two inner shoulders of the proximal section, bringing the substrate into contact with a ring disposed in the proximal section, placing the substrate between two rings disposed in the proximal section, bringing the substrate into contact with a frit disposed in the proximal section, or placing the substrate between two frits disposed in the proximal section.

According to any of the methods, the collected analytes may be subjected to an analytical procedure such as protein precipitation, fraction collection, centrifugation, spectrophotometry, imaging, nuclear magnetic resonance spectrometry, solid phase extraction, chromatography, mass spectrometry, genetic testing, and a combination of two or more of the foregoing.

According to any of the methods, in some implementations the biological fluid sample may be a blood-based sample.

According to another implementation, an apparatus for acquiring analytes from a dried biological fluid sample includes a tube, a substrate, and a sorbent bed. The tube includes a proximal section and a distal section adjoining the proximal section. The proximal section includes a proximal tube end circumscribing a proximal tube opening. The distal section includes a distal tube end circumscribing a distal tube opening of lesser inside diameter than the proximal tube opening. The substrate is disposed in a fixed position in the proximal section between the proximal tube end and the distal section, and spans a cross-sectional area of the proximal section. The substrate has a composition configured for dried biological fluid sample formation. The sorbent bed is disposed in a fixed position in the distal tube section between the proximal section and the distal tube end, and spans a cross-sectional area of the distal section. The sorbent bed has a composition configured for solid phase extraction. The apparatus establishes a fluid flow path from the proximal tube opening, through the proximal tube section including through the substrate, through the distal tube section including through the sorbent bed, and to the distal tube opening.

In some implementations, the tube may enclose a volume between the proximal tube end and the distal tube end, and the volume ranges from 100 to 5000 µL.

In some implementations, the inside diameter of the proximal tube opening is greater than an outside diameter of the substrate, the proximal section has an inside diameter that tapers from a maximum inside diameter at the proximal tube opening to a minimum inside diameter, and the minimum inside diameter is less than the outside diameter of the substrate.

In some implementations, the inside diameter of the distal tube opening ranges from 1 to 6 mm.

In some implementations, the composition of the tube is an organic polymer, an organic copolymer, or an organic polymer blend. In some implementations, the composition of the tube is a polyolefin, polypropylene, polyethylene, polyamide, polyacrylate, or a combination of two of more of the foregoing.

In some implementations, the substrate is disposed in the proximal section according to one of the following configurations: the substrate is in frictional contact with an inner surface of the proximal section, the substrate is in contact with an inner shoulder of the proximal section, the substrate is interposed between two inner shoulders of the proximal section, the substrate is in contact with a ring disposed in the proximal section, the substrate is interposed between two rings disposed in the proximal section, the substrate is in contact with a frit disposed in the proximal section, or the substrate is interposed between two frits disposed in the proximal section.

In some implementations, the substrate has an outside diameter ranging from 1 to 10 mm.

In some implementations, the composition of the substrate is silica, a cellulosic filter paper, a glass fiber/cellulose composite, a cellulose-free glass fiber paper, a polyamide, propylene, nitrocellulose, polyethersulfone, or combinations of two or more of the foregoing.

In some implementations, the sorbent bed is positioned at an axial distance from the distal tube opening, and the axial distance ranges from 1 to 5 mm.

In some implementations, the sorbent bed has a mass ranging from 1 to 10 mg.

In some implementations, the composition of the sorbent bed is an organic polymer, an organic copolymer, an organic polymer blend, a glass fiber cellulose, a metal oxide or metalloid oxide, an ion exchange modified metal oxide or metalloid oxide, a functionalized metal oxide or metalloid oxide, or combinations of two or more of the foregoing.

In some implementations, the composition of the sorbent bed is configured for retaining analytes from a dried biological fluid sample. In other implementations, the composition of the sorbent bed is configured for retaining non-analytical components while passing analytes from a dried biological fluid sample. In other implementations, the composition of the sorbent bed is configured for retaining analytes from a dried biological fluid sample and for retaining non-analytical components.

According to another implementation, a kit is provided for acquiring analytes from a dried biological fluid sample. The kit may include one or more tubes, one or more substrates, and one or more sorbent beds. In some implementations, the kit may also include one or more frits and/or one or more rings. In some implementations, the kit may also include tangible media providing, for example, instructions for assembling and/or utilizing an apparatus that includes a tube, a substrate, and a sorbent bed.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWING

The invention can be better understood by referring to the following figures. The components in the figures are not necessarily to scale, emphasis instead being placed upon illustrating the principles of the invention. In the figures, like reference numerals designate corresponding parts throughout the different views.

Figure 1 is an elevation view of an example of an apparatus for extracting analytes from a dried biological fluid sample according to an implementation of the present teachings.

Figure 2 is a cross-sectional view of a substrate of the apparatus illustrated in Figure 1, according to an implementation in which the substrate is disposed on an inside shoulder (or rib) of the apparatus.

Figure 3 is a cross-sectional view of the substrate of the apparatus illustrated in Figure 1, according to another implementation in which the substrate is disposed on a frit or ring that is positioned in the apparatus.

Figure 4 is an elevation view of the apparatus illustrated in Figure 1 after a conditioning medium has been added.

Figure 5 is an elevation view of the apparatus illustrated in Figure 1 after an elution solvent has been added.

### DETAILED DESCRIPTION

In the context of the present disclosure, the term "fluid" refers generally to liquid-phase materials and gas-phase materials, unless a liquid-phase material or a gas-phase material is specifically indicated. The terms "liquid-phase" and "liquid," and "gas-phase" and "gas," are used interchangeably. A liquid-phase material or liquid may be any liquid, such as a solution, suspension, slurry, multi-phase mixture or the like, and may include gaseous components (e.g., bubbles) and/or solid components (e.g., particles). A gas-phase material or gas may be any gas or vapor, and may include liquid components (e.g., droplets) and/or solid components (e.g., particles).

In the context of the present disclosure, the term "dried fluid sample" or "dried fluid spot" refers generally to a material that was initially provided in the liquid phase and was thereafter dried, such as by air drying.

In the context of the present disclosure, the term "biological fluid sample" generally refers to a sample of biological fluid obtained from plant, animal, microbial material, *in vitro* cell culture constituents, as well as samples from the environment. Non-limiting examples of the biological fluid sample include blood, plasma, serum, lymph, sputum, stool, tears, mucus, hair, skin, buccal scrape, nipple discharge, etc., as well as a homogenate, lysate or extract prepared from a whole organism or a subset of its tissues, cells or componenets parts or a fraction or portion thereof.

In the context of the present disclosure, the term "analyte" refers generally to any sample molecule of interest-that is, a molecule on which an analysis is desired such as, for example, a chromatographic analysis.

In the context of the present disclosure, the term "sample matrix" refers to any combination of analytes and non-analytes. The combination of analytes and non-analytes may exist in a liquid phase and/or a gas phase. The term "non-analytes" or "non-analytical components" in this context refers to components of the sample matrix for which analysis is not of interest because such components do not have analytical value and/or impair (e.g., interfere with) the analysis of the desired analytes. Examples of non-analytes may include water, oils, or other media in which the desired analytes may be found, molecules not of interest, as well as solvents, buffers, reagents, and various solid particles such as excipients, precipitates, fillers, and impurities.

In the context of the present disclosure, the term "diameter" refers in a general sense to the characteristic dimension of any shape and therefore does not necessarily imply a circular shape. As examples, the characteristic dimension of a tube of circular cross-section may be considered a diameter, the characteristic dimension of a tube of elliptical cross-section may be considered a major axis, and the characteristic dimension of a tube of polygonal cross-section may be considered the length (width) of a side or the distance between two inside corners. For convenience, the term "diameter" encompasses all such types of characteristic dimensions.

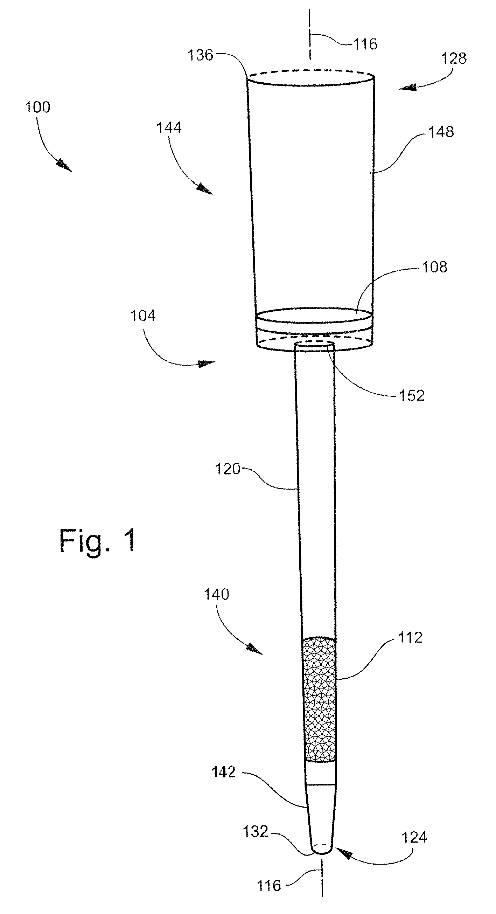

Figure 1 is an elevation view of an example of an apparatus **100** for extracting analytes from a dried biological fluid sample according to an implementation of the present teachings. In the present implementation, the apparatus **100** generally includes a tube (or pipette, etc.) **104,** a substrate **108,** and a sorbent bed **112** (or plug, mass, or packing of sorbent material).

The tube **104** is generally situated along a longitudinal axis **116.** In Figure 1 and in typical implementations, the tube **104** has a generally straight orientation along the longitudinal axis **116,** while in other implementations the tube **104** may include one or more curved or angled sections. The tube **104** generally includes a hollow body **120** coaxial with the longitudinal axis **116.** The hollow body **120** may include a single tube wall or two or more adjoined walls. The hollow body **120** defines an internal cross-sectional area which, from the perspective of Figure 1, is orthogonal to the longitudinal axis **116.** The cross-sectional area may be circular as in the illustrated example, or alternatively may be elliptical or polygonal. The tube **104** (i.e., the hollow body **120)** terminates at a distal tube end **124** and an axially opposite proximal tube end **128.** The distal tube end **124** circumscribes a distal tube opening **132,** and the proximal tube end **128** circumscribes a proximal tube opening **136.** In typical implementations, the inside diameter of the distal tube opening **132** is less than the inside diameter of the proximal tube opening **136.**

The tube **104** further includes a distal section (or pipette tip) **140** generally defined by a portion of the hollow body **120** that extends to (terminates at) the distal tube opening **132.** The distal section **140,** or a distal-most portion of the distal section **140,** may include a tapered distal tube wall **142** such that the inside diameter of the distal section **140** (or at least a distal-most portion of the distal section **140)** tapers in the axial direction generally toward the distal tube end **124,** whereby the distal tube opening **132** is the minimum inside diameter of the distal section **140.** Both the inside surface and the outside surface of the wall of the distal section **140** may be tapered (relative to the longitudinal axis **116),** as illustrated in Figure 1. The tapered geometry may or may not continue over the remaining length of the tube **104.** The upper portion of the tube **104** (proximate to and including the proximal tube end **128),** and/or the lower portion of the tube **104** (proximate to and including the distal tube end **124)** may be configured as desired for coupling to any suitable means for flowing liquid through the tube **104** in either or both axial directions (e.g., vacuum manifold, positive-pressure pump, aspiration or fill tubing, etc.). In some implementations, the upper portion and/or lower portion of the tube **104** may be configured for coupling to an automated liquid handling apparatus (e.g., robot, autosampler, or the like).

The tube **104** further includes a proximal section **144** generally defined by a portion of the hollow body **120** that extends to (terminates at) the proximal tube opening **136.** The proximal section **144** may include a tapered proximal tube wall **148** such that the inside diameter of the proximal section **144** tapers in the axial direction generally toward the distal section **140,** whereby the proximal tube opening **136** is the maximum inside diameter of the proximal section **144.** Both the inside surface and the outside surface of the wall of the proximal section **144** may be tapered (relative to the longitudinal axis **116),** as illustrated in Figure 1. The transition from the proximal section **144** to the distal section **140** may be abrupt or gradual. In the implementation illustrated in Figure 1 the transition is relatively abrupt, being in the form of a stepped profile or distinct reduction in inside diameter. Thus, in the illustrated implementation, the tube **104** may be characterized as including a transitional opening **152** providing fluid communication between the proximal section **144** and the distal section **140.** In other implementations, the transition from the proximal section **144** to the distal section **140** may be much more gradual, in which case the proximal section **144** may be defined generally as the portion of the tube **104** that includes the substrate **108.** In either case, the inside diameter of the tube **104** over the axial length of the proximal section **144** (whether or not tapered) may generally be greater than the inside diameter of the tube **104** over the axial length of the distal section **140** (whether or not tapered).

The tube **104** encloses a volume extending along the longitudinal axis **116** from the proximal tube opening **136** to the distal tube opening **132.** In typical implementations, the volume ranges from 100 µL to 5,000 µL (5 mL), while in other implementations the volume may be less than 100 µL or greater than 5 mL. In one non-limiting example, the volume is 450 µL. In another non-limiting example, the volume is 300 µL. In typical implementations, the inside diameter of the distal tube opening **132** ranges from 1 to 6 mm. In some implementations, the inside diameter of the distal tube opening **132** ranges from 3 to 4 mm. In some implementations the tube **104** is intended for insertion into the well of a multi-well plate (or other type of container), a centrifuge tube, or other receptacle. In such implementations, the outside diameter of the tube **104** (at least that portion of the tube **104** intended for insertion into the receptacle) should be slightly less than the inside diameter of the receptacle into which the tube **104** is to be inserted. For instance, in typical multi-well plates, the inside diameter of each well ranges from 3 mm to 8 mm.

The tube **104** may have any suitable inert (i.e., non-reactive and non-binding) composition, particularly an organic polymer. In the present context, the term "polymer" encompasses homopolymers, copolymers, and polymer blends. Examples of suitable polymers include, but are not limited to, polypropylene, polyethylene, other polyolefins, polyamide, polyacrylate, a combination of two of more of the foregoing, and more generally any chemically inert plastic formable into a tube such as by injection molding or other suitable fabrication technique. In the present implementation, the use of the apparatus **100** eliminates the need for punching dried biological fluid spots. Accordingly, the tube **104** is not utilized as a spot punch device and hence its material composition does not require the strength or hardness of a spot punch device.

The sorbent bed **112** may be positioned at an axial distance from the distal tube opening **132.** The sorbent bed **112** may have any configuration suitable for retaining analytes (or non-analytes such as in a pass-through clean-up configuration) according to mechanisms generally associated with solid phase extraction (SPE) or chromatography. In some implementations the sorbent bed **112** is a mass of particles while in other implementations is a mass of fibers, as appreciated by persons skilled in the art. Particles may be spherical or irregular. Due to the wide range of applications in which the apparatus **100** may be utilized, no specific limitations are placed on particle size or pore size (porosity). In one non-limiting example, particle size (e.g., diameter) may range from 1 µm to 200 µm, and pore size may range from 50 Å to 350 Å. The variability in particle size may be monodisperse or substantially monodisperse, or may exhibit an approximate Gaussian distribution, or may exhibit a multi-modal distribution (i.e., two or more maximum sizes). Particles may or may not be encapped, for a purpose such as, for example, depolarization.

Examples of the composition of the sorbent bed **112** include, but are not limited to, various organic polymers (homopolymers, copolymers, or polymer blends), glass fiber cellulose, silica, ion exchange modified silica, C8, C18, amide, amino, diol, and combinations of two or more of the foregoing. In some implementations, the sorbent bed **112** is composed of a glass fiber matrix that includes (e.g., is embedded with) a bonded phase such as a metal oxide or metalloid oxide. The metal oxide or metalloid oxide is typically one that is capable of reacting with silanes, such as alkoxysilanes, aminosilanes, hydroxysilanes or halosilanes. Examples of suitable metal oxides and metalloid oxides include, but are not limited to, silica, alumina, zeolite, mullite, zirconia, vanadia or titania, and mixtures or composites thereof. The metal oxide or metalloid oxide may functionalized (chemically treated) by a functional moiety. Examples of functional moieties include, but are not limited to, hydrocarbyl (e.g., C₂₋₃₀ alkyl, alkenyl, alkynyl), --NHC(O)-- (amido), --C(O)NH-(carbamyl), --OC(O)NH-- (carbamato), --NHC(O)O-- (urethane), --NHC(O)NH-- (carbamido or urea), --NCO (isocyanato), --CHOHCHOH-- (diol), CH₂OCHCH₂O-- (glycidoxy), --(CH₂CH₂O)ₙ-(ethoxy), --(CH₂CH₂CH₂O)ₙ-- (propoxy), --C(O)-- (carbonyl), --C(O)O-- (carboxy), CH₃C(O)CH₂-(acetonyl), --S-- (thio), --SS-- (dithio), --CHOH-- (hydroxy), --O-- (ether), --SO-- (sulfinyl), --SO₂-(sulfonyl), --SO₃-- (sulfonic acid), --OSO₃-- (sulfate), --SO₂NH--, --SO₂NMe-- (sulfonamido),-NH--, --NMe--, --NMe₂⁺--, --N[(CH₂)ₙ]₂⁺-- (amino), --CN (nitrilo), --NC (isonitrilo), --CHOCH-(epoxy), --NHC(NH)NH-- (guanidino), --NO₂ (nitro), --NO (nitroso), and --OPO₃-- (phosphate), where Me is methy lene or methyl, and where n is an integer up to 30, typically less than 10.

The sorbent bed **112** may be installed in the tube **104** by any suitable technique, such as by fabricating a bulk quantity of the sorbent material, cutting a desired quantity of the sorbent material, inserting the sorbent material into the tube **104** via the proximal tube opening **136,** and utilizing a needle or other tool to position the sorbent material at a desired axial distance from the distal tube opening **132** to form a sorbent bed **112** that spans the cross-sectional flow area of the tube **104.** The sorbent bed **112** may be compressed as needed to attain a desired density and average size of interstices. The sorbent bed **112** may be fixed in position in the distal section **140** at a desired axial elevation near the distal tube opening **132** by any suitable means such as, for example, frictional contact between the sorbent bed **112** and an inside surface or other structure of the distal section **140,** or retention on (contact with) or placement (interposition) between one or more frits or rings (not shown) located in the distal section **140.** In typical implementations, the sorbent bed **112** is held in place at an axial distance from the distal tube opening **132** ranging from I to 5 mm. In some implementations, the sorbent bed **112** has a mass ranging from 1 to 20 mg, and in other implementations has a mass ranging from 1 to 10 mg.

The substrate **108** may have any composition suitable for use in creating a dried biological fluid sample. Examples of the composition (or material) of the substrate **108** include, but are not limited to, silica, various types of cellulosic filter papers, glass fiber/cellulose composites, cellulose-free glass fiber paper, polyamides (e.g., nylon), propylene, nitrocellulose, and polyethersulfone. Preferably, the substrate material is able to uniformly absorb a biological fluid sample to form a homogeneous spot, which in some implementations may be circular or approximately circular. In typical implementations, the substrate **108** is circular (e.g., disk-shaped) but more generally has a shape conforming to the internal cross-sectional area of the proximal section **144.** In some implementations, the thickness of the substrate **108** ranges from 0.010 inch to 0.050 inch (0.25 mm to 1.3 mm). In some implementations, the (outside) diameter of the substrate **108** ranges from 1 mm to 10 mm. In one non-limiting example, the diameter of the substrate **108** is 6 mm.

The substrate **108** may be installed in the tube **104** by any suitable technique, such as by inserting the substrate **108** into the tube **104** via the proximal tube opening **136,** and fixing the position of the substrate **108** in the proximal section **144.** In some implementations, a needle or other tool may be utilized to position the substrate **108** at a desired axial distance from the proximal tube opening **136** (or at a desired axial distance from the illustrated transitional opening **152,** if present), such that the substrate **108** spans the cross-sectional flow area of the proximal section **144.** The inside diameter of the proximal tube end **136** is large enough to allow insertion of the substrate **108** into the proximal section **144.** The substrate **108** may be fixed in position in the proximal section **144** at the desired axial elevation relative to the proximal tube opening **136** (or relative to the transitional opening **152)** by any suitable means such as, for example, frictional contact between the substrate **108** and an inside surface of the proximal section **144.** As noted above, the proximal section **144** may be tapered, in which case the substrate **108** may be inserted far enough into the proximal section **144** until sufficient frictional contact is made with the tapering wall of the proximal section **144.** The apparatus **100** may be provided to the end user with the substrate **108** pre-installed in the proximal section **144,** or separately in which case the end user may install the substrate **108** according to instructions provided to the end user.

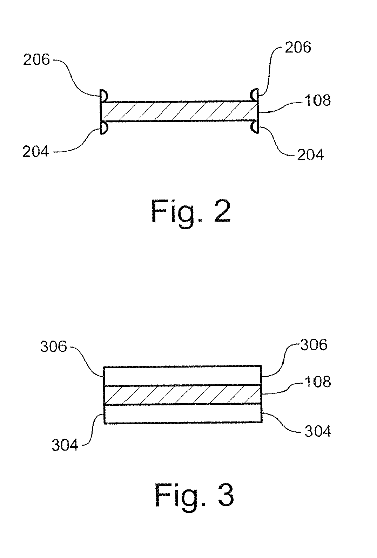

Figure 2 is a cross-sectional view of the substrate **108** according to another implementation, in which the substrate **108** is disposed on (or brought into contact with) an inside shoulder (or rib) **204** that is part of the inside surface of the proximal section **144** of the tube **104** (Figure 1). As a further alternative also illustrated in Figure 2, the substrate **108** may be retained (or captured, placed, interposed) between a lower inside shoulder (or rib) **204** and an upper inside shoulder (or rib) **206.** The substrate **108** may be sufficiently deformable or flexible so as to allow placement between the lower inside shoulder (or rib) **204** and upper inside shoulder (or rib) **206.** The lower inside shoulder (or rib) **204** and the upper inside shoulder (or rib) **206** may each be a single, continuous structure that runs circumferentially about the inside surface of the proximal section **144,** or may each include a plurality of structures circumferentially spaced from each other along the inside surface of the proximal section **144.**

Figure 3 is a cross-sectional view of the substrate **108** according to another implementation, in which the substrate **108** is disposed on a frit **304** that is positioned in the proximal section **144** of the tube **104** (Figure 1). Alternatively, the frit **304** may be a ring. The frit (or ring) **304** may be held in place by frictional contact with an inside surface of the proximal section **144.** In the case of the frit **304,** the frit **304** may be held in place by retention on (or brought into contact with) an inside shoulder or rib (or between two inside shoulders or ribs) such as the inside shoulder(s) or rib(s) **204** and **206** shown in Figure 3. In the case of a ring, the ring may serve the same or similar function as the inside shoulder or rib **204** (or inside shoulders or ribs **204** and **206)** shown in Figure 3. The frit (or ring) **304** may be composed of the same material as the tube **104.**

It will be appreciated that the sorbent bed **112** may be supported in the distal section **140** of the tube **104** by alternative means analogous to those described above and illustrated in Figures 2 and 3 in relation to the substrate **108.**

From the foregoing it is evident that in the present implementation, the apparatus **100** is assembled by installing the substrate **108** in the proximal section **144** of the tube **104** and installing the sorbent bed **112** in the distal section **140** of the tube **104.** The substrate **108** and/or sorbent bed **112** may be fixed in position utilizing frictional contact, or utilizing features such as illustrated in Figures 2 and 3. In assembled form, the apparatus **100** provides (or defines, or establishes) a liquid flow path running from the proximal tube opening **136,** through the proximal section **144** (including through the substrate **108)** and into the distal section **140** (via a distinct transitional opening **152,** if present), through the distal section **140** (including through the sorbent bed **112)** and to the distal tube opening **132.** Alternatively or additionally, liquid may be flowed in the reverse direction. That is, the apparatus **100** may alternatively or additionally provide (or define, or establish) a liquid flow path running from the distal tube opening **132,** through the distal section **140** (including through the sorbent bed **112)** and into the proximal section **144** (via the distinct transitional opening **152,** if present), through the proximal section **144** (including through the substrate **108)** and to the proximal tube opening **136.** In either direction, liquid may be flowed by pushing (e.g., positive displacement) or pulling (e.g., vacuum-assist). The direction of liquid flow through the apparatus **100** will depend on the various method developments for which utilization of the apparatus **100** is contemplated. A particular method may include different steps requiring liquid flow in different respective directions. Moreover, a particular method (or method step) may not require flow over the entire flow path provided by the apparatus **100,** e.g., from the proximal tube opening **136** to the distal tube opening **132,** or from the distal tube opening **132** to the proximal tube opening **136.** For example, a liquid may be flowed into the distal section **140** via the distal tube opening **132** without reaching the substrate **108** or other region of the proximal section **144.**

The apparatus **100** may generally be utilized in any method for acquiring analytes from a biological fluid sample containing one or more dried biological fluid spots. According to one implementation, the apparatus **100** is provided in the assembled form illustrated in Figure 1. The apparatus **100** at this time may be held manually or loaded into, for example, a rack, an SPE-type manifold, or a liquid handling apparatus. A suitable aliquot (e.g., 10-20 µL) of a biological fluid sample is dispensed onto the substrate **108,** such as by flowing the biological fluid sample through the proximal tube opening **136.** The as-dispensed biological fluid sample is adsorbed by the material of the substrate **108** and is dried to create a dried biological fluid sample. In one implementation, the biological fluid sample is dried in an ambient environment (e.g., air) at room temperature for 2-24 hours. In other implementations, drying may be assisted by any suitable means such as vacuum or heating.

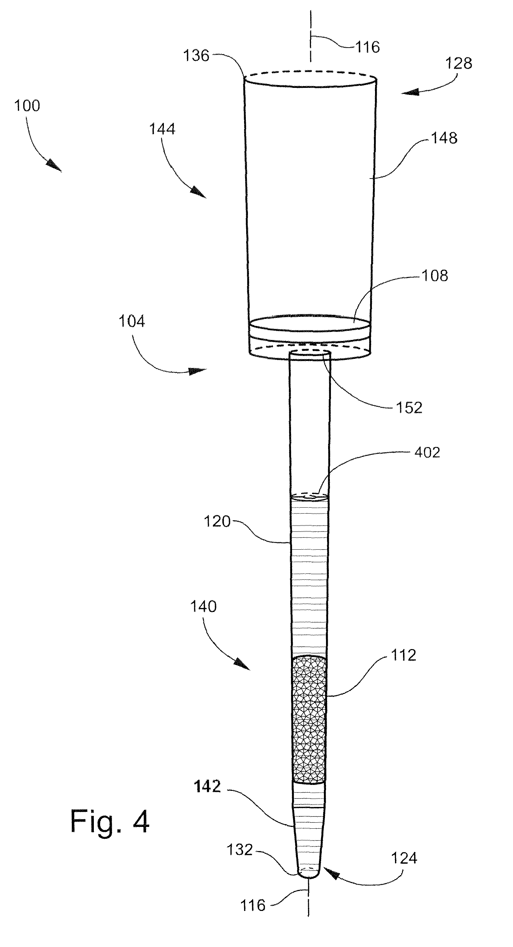

Referring to Figure 4, the sorbent bed **112** is prepared or activated by flowing a conditioning medium (or solvent) **402** through the sorbent bed **112,** typically by flowing the conditioning medium through the distal tube opening **132** and through at least a portion of the distal section **140** containing the sorbent bed **112.** The conditioning medium **402** may be flowed into the distal section **140** by any means, such as by pushing or pulling the conditioning medium **402** through the distal section **140** or by immersing at least a portion of the distal section **140** of the apparatus **100** in a reservoir containing the conditioning medium **402.** The conditioning medium **402** is typically a solvent, examples of which include, but are not limited to, methanol (MeOH) and acetonitrile. After a sufficient period of time has elapsed for conditioning, the condition medium **402** may be removed from the apparatus **100** by any suitable means. The conditioning step may include an equilibration sub-step that follows the activation sub-step to adjust pH or control (promote or suppress) ionization, such as by flowing water and a pH buffer such as, for example, formic acid. In some implementations, the conditioning step may be preceded by a pre-conditioning step in which a pre-conditioning solvent is flowed through the tube **104** to remove impurities that might interfere with the analysis. The pre-conditioning solvent may, or example, be the same as one of the solvents referred to below (e.g., the "second" elution solvent).

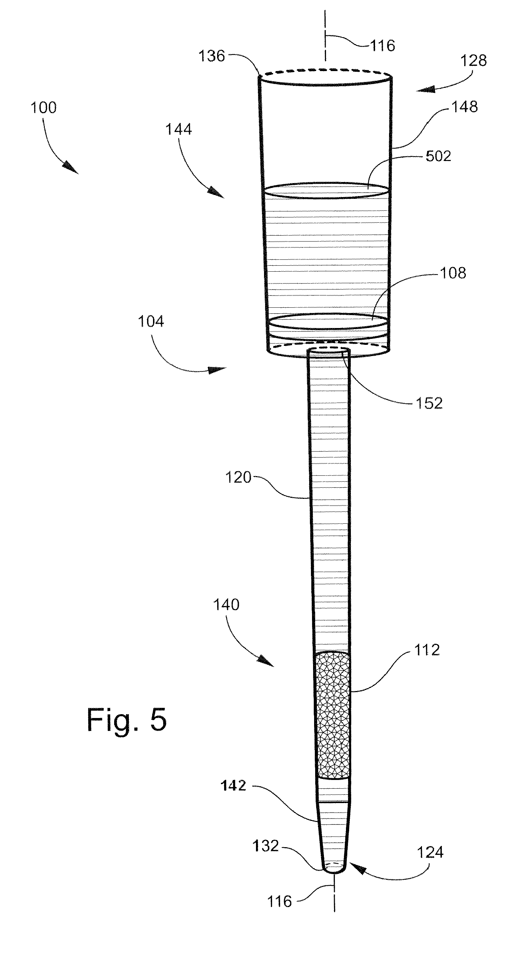

Referring to Figure 5, a first elution solvent **502** (or combination or solvents, with or without buffers or other additives, as needed) is then flowed from a solvent source (e.g., a reservoir) and through the apparatus **100,** typically in the direction from the proximal tube opening **136** to the distal tube opening **132,** such that the first elution solvent **502** flows through the substrate **108** and the sorbent bed **112.** The flow of the first elution solvent **502** may be assisted by gravity, centrifugation, vacuum applied at the distal tube opening **132** and/or positive pressure (e.g., via a syringe) applied at the proximal tube opening **136.** The first elution solvent **502** causes analytes to be eluted from the substrate **108,** carried to the sorbent bed **112,** and retained on (i.e., on and/or in) the sorbent bed **112.** The first elution solvent **502** may be discharged from the tube **104** into a suitable receptacle (not shown). In some implementations, a wash solvent (e.g., water, methanol, or both, with or without a buffer) may then be flowed through the tube **104** to elute interferences and impurities without eluting the analytes. After elution from the substrate **108** is complete, the apparatus **100** may then be transported to a suitable receptacle (not shown) for collecting an analyte-inclusive liquid sample matrix. For example, the apparatus **100** may be positioned over or in a selected well of a standard-format multi-well plate, or positioned over or in a single-well plate or equivalent structure (e.g., a sample vial, cuvette, container, etc., or installed in a centrifuge, etc. The receptacle may be configured for use in conjunction with an automated liquid handling apparatus. The analytes are then desorbed from the sorbent bed **112** by flowing a second elution solvent through the tube **104** and the sorbent bed **112** typically in the direction of the distal tube opening **132.** The desorbed analytes carried by second elution solvent pass through the distal tube opening **132** into the receptacle, thereby collecting an analyte-inclusive liquid sample matrix suitable for subsequent analysis.

The types of solvents utilized for elution generally depend on the type of components of the sample to be eluted from the substrate **108** and the types of components (e.g., analytes or non-analytes, degree of polarity, etc.) to be desorbed from the sorbent bed **112.** Examples of elution solvents include, but are not limited to, hexane, isooctane, carbon tetrachloride, chloroform, methylene chloride (dichloromethane), tetrahydrofuran, diethyl ether, ethyl acetate, ethanol, methyl tert-butyl ether, acetone, acetonitrile, isopropanol, methanol, water, and acetic acid.

As regards the various methods described herein, it will be understood that any step involving the flow of a conditioning medium, elution solvent, wash/rinse solvent or other fluid may be repeated one or more times as necessary or desired. In other words, any given step of flowing a fluid may encompass one or more passes through the tube **104,** or one or more iterations of immersing the tube **104** in a container holding the fluid, as appropriate.

It will be appreciated that the apparatus **100** may generally be utilized in any SPE or chromatographic procedure. For example, the material of the sorbent bed **112** may be configured for retaining certain analytes eluted from the substrate **108.** Analytes retained by the sorbent bed **112** may subsequently be collected by, for example, solvent-based desorption as described above. Alternatively, the sorbent bed **112** may be configured for retaining certain non-analytical material (e.g., interferences, impurities, etc.) in pass-through clean-up procedures as appreciated by persons skilled in the art. That is, an elution solvent may be dispensed into the apparatus **100** such that analytes are eluted from the substrate **108** and pass through the sorbent bed **112** and into a receptacle without being retained, while the non-analytical components are retained by the sorbent bed **112,** thus forming an analyte-inclusive liquid sample matrix via a single elution step. The analytes may then be concentrated or enriched by any suitable technique. The non-analytical material may be any chemical or biological species not of interest to the user, and generally depends on the type of biological fluid sample and/or the analysis to be performed. Examples of non-analytical material may thus include components considered to be interferences, ion suppressing components, salts, surfactants, lipids, proteins, etc. In other implementations, the sorbent bed **112** may be configured to retain both analytes and certain non-analytical components when the sample passes through, and the retained components subrequently removed by selective washing or selective elution. In one example, the retained non-analytical components are rinsed out from the sorbent bed **112** and tube **104** by flowing one or more wash solutions through the sorbent bed **112** and tube **104** one or more times. This wash solution may be any suitable solution that is strong enough to remove the non-analytical components but weak enough to leave the analytes behind (i.e., retained on the sorbent bed **112** for subsequent desorption by an appropriate elution solvent). In another example in which both analytes and certain non-analytical components are retained by the sorbent bed **112,** the retained analytes are rinsed out from the sorbent bed **112** and tube **104** by flowing one or more solvents through the sorbent bed **112** and tube **104** one or more times. The solvent utilized in this case may be any suitable solvent that is strong enough to remove the analytes but weak enough to leave the non-analytical components behind (i.e., retained on the sorbent bed **112,** after which the apparatus **100** may be discarded, or in some cases re-used after appropriate cleaning and reconditioning). In all such methods, the sorbent bed **112** may be utilized to improve the sensitivity of subsequent analytical procedures, and more generally may be utilized in the development of a diverse variety of methods.

After creating the analyte-inclusive liquid sample matrix, the analyte-inclusive liquid sample matrix may be processed in any desired manner for separating, concentrating, purifying, and/or analyzing the analytes (i.e., subsequent analytical techniques). Examples of subsequent analytical techniques include, but are not limited to, protein precipitation, fraction collection, centrifugation, spectrophotometry (or optical spectroscopy), microscopy or other imaging techniques, nuclear magnetic resonance (NMR) spectrometry, various types of SPE (e.g., normal-phase, reversed-phase, ion-exchange, etc.), and various types of chromatography (e.g., preparative chromatography, liquid chromatography (LC), gas chromatography (GC), etc.) as well as hyphenated techniques entailing chromatography coupled with mass spectrometry (LC/MSⁿ, GC/MSⁿ, etc.). Other subsequent analytical techniques include the testing or processing of genetic material (i.e., "genetic testing") such as ribonucleic acid (RNA) or deoxyribonucleic acid (DNA). Examples of genetic testing include, but are not limited to, polymerase chain reaction (PCR), reverse transcriptase PCR (RT-PCR), ligase chain reaction (LCR), hybridization, genomic sequencing, labeling, assaying, etc. The liquid sample matrix may be collected in a multi-well plate or other receptacle that is then placed in a liquid handling robot for automated subsequent analysis, as appreciated by persons skilled in the art. Alternatively, the liquid sample matrix may be aspirated from the apparatus **100** and injected directly into an analytical instrument (e.g., LC, GC, LC/MSⁿ, GC/MSⁿ, etc.), which may be done manually or by automation. The apparatus **100** may be discarded after use.

In some implementations of the present disclosure, a kit for acquiring analytes from a dried biological fluid sample is provided. The kit may include one or more tubes **104,** one or more substrates **108,** and one or more plugs of sorbent material, examples of which are described above. In some implementations, the kit may further include one or more frits or rings **304** and **306,** examples of which are described above. The kit may be configured to enable assembly of the apparatus **100** illustrated in Figure 1. The tube(s) **104** and other components of the apparatus **100** may be disposable, i.e., configured for single-use. In the case of a kit providing two or more tubes **104,** the tubes **104** may each have the same dimensions and shape and thus be configured for use in conjunction with a specific type of collection device, sample carrier (e.g., multi-well plate), sample injector (as may be associated with an analytical instrument), liquid handling robot, etc. Alternatively, the tubes **104** may have different dimensions and/or shapes such that the kit is compatible with more than one type of collection device, sample carrier, sample injector, liquid handling robot, etc. In the case of a kit providing two or more substrates **108,** the substrates **108** may have the same or different compositions depending on a desired range of applications contemplated for the kit. For example, different types of substrates **108** may be optimal for absorbing different types of biological fluid samples, and hence optimal for creating different types of dried biological fluid samples. Likewise, in the case of a kit providing two or more plugs of sorbent material, the sorbent materials may have the same or different compositions depending on a desired range of applications contemplated for the kit. For instance, different sorbent materials may be respectively configured for retaining analytes, non-analytes, or both analytes and non-analytes, or optimized for retaining specific types of analytes or non-analytes. The kit may provide substrates **108,** sorbent beds **112,** and/or frits or rings **304** and **306** (if any) separately from the tube(s) **104,** or preassembled (preinstalled) in corresponding tubes **104.** In some implementations, the kit may include tangible media (printed matter, computer-readable storage media, etc.) providing, for example, instructions for assembling and/or utilizing the apparatus **100** according to one or more methods such as described herein, etc. For example, the kit may provide instructions for assembling the apparatus **100** such as for creating sorbent beds **112** from the sorbent material provided, installing sorbent beds **112,** installing substrates **108,** and the like.

One or more implementations of the apparatus and methods disclosed herein may be utilized in a wide variety of dried biological sample analyses of pharmaceutical compounds, other drug-related compounds, or other chemistries, or high molecular weight (HMW) molecules such as DNA, RNA, proteins or other biopolymers. Such analyses include dried blood spot (DBS) analyses as noted above. The apparatus provides effective, reliable analytical or preparative techniques that do not require punching spots from spot-containing substrates such as convention DBS cards. The apparatus is configured for use with a wide variety of readily available collection devices such a standard multi-well plates, and thus is readily adapted for automated sample extraction/cleanup and analysis. The apparatus is configured for creating liquid sample matrices from dried biological fluid samples by a wide variety of techniques. The apparatus may be fabricated entirely of disposable materials, thereby significantly limiting carryover and cross-contamination.

In general, terms such as "communicate" and "in ... communication with" (for example, a first component "communicate with" or "is in communication with" a second component) are used herein to indicate a structural, functional, mechanical, electrical, signal, optical, magnetic, electromagnetic, ionic or fluidic relationship between two or more components or elements. As such, the fact that one component is said to communicate with a second component is not intended to exclude the possibility that additional components may be present between, and/or operatively associated or engaged with, the first and second components.

It will be understood that various aspects or details of the invention may be changed without departing from the scope of the invention. Furthermore, the foregoing description is for the purpose of illustration only, and not for the purpose of limitation-the invention being defined by the claims.

## Claims

1. A method for acquiring analytes from a dried biological fluid sample, the method comprising:
dispensing a biological fluid sample on a substrate (108) disposed in a fixed position in a proximal section (144) of a tube (104);
drying the biological fluid sample on the substrate (108) to form a dried biological fluid sample;
flowing a conditioning solvent (402) into a distal section (140) of the tube (104) adjoining the proximal section (144) to condition a sorbent bed (112) disposed in a fixed position in the distal section (140);
flowing a first elution solvent (502) through the substrate (108) and the sorbent bed (112), wherein analytes are eluted from the dried biological fluid sample and retained on the sorbent bed (112);
flowing a second elution solvent through the substrate (108) and the sorbent bed (112), wherein the analytes are eluted from the sorbent bed (112) and pass through an opening (132) of the distal section (140); and
collecting the analytes passing through the opening (132).

2. A method for acquiring analytes from a dried biological fluid sample, the method comprising:
dispensing a biological fluid sample on a substrate (108) disposed in a fixed position in a proximal section (144) of a tube (104);
drying the biological fluid sample on the substrate (108) to form a dried biological fluid sample;
flowing a conditioning solvent (402) into a distal section (140) of the tube (104) adjoining the proximal section (144) to condition a sorbent bed (112) disposed in a fixed position in the distal section (140);
flowing an elution solvent through the substrate (108) and the sorbent bed (112), wherein analytes are eluted from the dried biological fluid sample and pass through the sorbent bed (112) and an opening (132) of the distal section (140), while non-analytes are retained on the sorbent bed (112); and
collecting the analytes passing through the opening (132).

3. The method of claim 1 or 2, comprising, before dispensing the biological fluid sample, installing the substrate (108) in the proximal section (144).

4. The method of claim 3, wherein installing the substrate (108) comprises inserting the substrate (108) through an opening (136) of the proximal section (144) and fixing the position of the substrate (108) in the proximal section (144).

5. The method of claim 1, comprising, before flowing the second elution solvent, flowing a wash solvent through the substrate (108) and the sorbent bed (112) to remove residual non-analytes from the tube (104).

6. The method of any one of claims 1 to 5, comprising subjecting the collected analytes to an analytical procedure selected from the group consisting of protein precipitation, fraction collection, centrifugation, spectrophotometry, imaging, nuclear magnetic resonance spectrometry, solid phase extraction, chromatography, mass spectrometry, genetic testing, and a combination of two or more of the foregoing.

7. An apparatus (100) for acquiring analytes from a dried biological fluid sample, the apparatus comprising:
a tube (104) comprising a proximal section (144) and a distal section (140) adjoining the proximal section (144), the proximal section (144) comprising a proximal tube end (128) circumscribing a proximal tube opening (136), the distal section (140) comprising a distal tube end (124) circumscribing a distal tube opening (132) of lesser inside diameter than the proximal tube opening (136);
a substrate (108) disposed in a fixed position in the proximal section (144) between the proximal tube end (128) and the distal section (140), the substrate (108) spanning a cross-sectional area of the proximal section (144) and having a composition configured for dried biological fluid sample formation; and
a sorbent bed (112) disposed in a fixed position in the distal tube section (140) between the proximal section (144) and the distal tube end (124), the sorbent bed (112) spanning a cross-sectional area of the distal section (140) and having a composition configured for solid phase extraction,
wherein the apparatus (100) establishes a fluid flow path from the proximal tube opening (136), through the proximal tube section (144) including through the substrate (108), through the distal tube section (140) including through the sorbent bed (112), and to the distal tube opening (132).

8. The apparatus of claim 7, wherein the inside diameter of the proximal tube opening (136) is greater than an outside diameter of the substrate (108), the proximal section (144) has an inside diameter that tapers from a maximum inside diameter at the proximal tube opening (136) to a minimum inside diameter, and the minimum inside diameter is less than the outside diameter of the substrate (108) and/or wherein the inside diameter of the distal tube opening (136) ranges from 1 to 6 mm.

9. The apparatus of claim 7 or 8, wherein the tube (104) has a composition selected from the group consisting of an organic polymer, an organic copolymer, an organic polymer blend,

10. The apparatus of any one of claims 7 to 9, wherein the tube has a composition selected from the group consisting of polyolefins, polypropylene, polyethylene, polyamide, polyacrylate, or a combination of two of more of the foregoing.

11. The apparatus of any one of claims 7 to 10, wherein the substrate (108) is disposed in the proximal section (144) according to a configuration selected from the group consisting of the substrate (108) being in frictional contact with an inner surface of the proximal section (144), the substrate (108) being in contact with an inner shoulder (204) of the proximal section (144), the substrate (108) being interposed between two inner shoulders (204, 206) of the proximal section (144), the substrate (108) being in contact with a ring (304) disposed in the proximal section (144), the substrate (108) interposed between two rings (304, 306) disposed in the proximal section (144), the substrate (108) being in contact with a frit (304) disposed in the proximal section (144), and the substrate (108) interposed between two frits (304, 306) disposed in the proximal section (144).

12. The apparatus of any one of claims 7 to 11, wherein the substrate (108) has an outside diameter ranging from 1 to 10 mm.

13. The apparatus of any one of claims 7 to 12, wherein the substrate (108) has a composition selected from the group consisting of silica, cellulosic filter papers, glass fiber/cellulose composites, cellulose-free glass fiber paper, polyamides, propylene, nitrocellulose, polyethersulfone, and combinations of two or more of the foregoing.

14. The apparatus of any one of claims 7 to 13, wherein the sorbent bed (112) is positioned at an axial distance from the distal tube opening (132), and the axial distance ranges from 1 to 5 mm.

15. The apparatus of any one of claims 7 to 14, wherein the sorbent bed (112) has a mass ranging from 1 to 10 mg.

16. The apparatus of any one of claims 7 to 15, wherein the sorbent bed (112) has a composition selected from the group consisting of an organic polymer, an organic copolymer, an organic polymer blend, a glass fiber cellulose, a metal oxide or metalloid oxide, an ion exchange modified metal oxide or metalloid oxide, a functionalized metal oxide or metalloid oxide, and combinations of two or more of the foregoing, and/or wherein the composition of the sorbent bed (112) is selected from the group consisting of a composition configured for retaining analytes from a dried biological fluid sample, a composition configured for retaining non-analytical components while passing analytes, and a composition configured for retaining analytes from a dried biological fluid sample and for retaining non-analytical components.
